# EUROPÄISCHE PATENTANMELDUNG

(11) **EP 1 837 824 A1**
(43) Veröffentlichungstag der Anmeldung: **26.09.2007**
(21) Anmeldenummer: 06100999.9
(22) Anmeldetag: 30.01.2006
(51) Int. Cl.: G06Q 40/00

(54) **Dynamische, funktionelle Datenbankstruktur für Datenerfassungssysteme automatisierter Tarifierungsvorrichtungen bei ein- oder mehrstufigen Schadensdeckungssystemen**

(71) Anmelder: Swiss Reinsurance Company, 8022 Zurich (CH)
(72) Erfinder: Eibicht, Christian, 8444, Henggart (CH); Roth, Peter, 4663, Aarburg (CH); Stalvies, Gian Duri, 8626, Ottikon (CH)
(74) Vertreter: Braun, André jr.

(57) **Zusammenfassung**

Vorgeschlagen wird eine dynamische, funktionelle Datenbankstruktur und entsprechendes Verfahren für Datenerfassungssysteme automatisierter Tarifierungsvorrichtungen (12) bei ein- oder mehrstufigen Schadensdeckungssystemen (11), mittels welcher eine mit Erfassungseinheiten (101) des Datenerfassungssystem (10) erfasste Vielzahl von historischen Schadensdatensrekords (111) wechselseitig zuordenbar sind. Mittels ersten dynamisch generierbaren Datenelementen sind Schadensentwicklungsparameter einem entsprechenden Schadensdatenrekord (111) zuordenbar. Mittels zweiten dynamisch generierbaren Datenelementen sind Ereigniskorrelationsdaten aus den erfassten Daten zuordenbar, wobei die Ereigniskorrelationsdaten mittels einer entsprechenden dynamischen Verknüpfung mit Batchdatenrekords (141) einer Lookuptable vergleichbar sind. Mittels dritten dynamisch generierbaren Datenelementen sind betriebsartspezifische und/oder lokationsspezifische Segmentierungsparameter einem jeweiligen Schadensdatenrekord (131) zuordenbar, wobei mittels der bestimmten Segmentierungsparameter die erfassten Daten segmentierbar und normierbar sind. Mittels vierten Datenelementen sind eine Vielzahl von benutzerspezifischen Loss-Tables (161) generierbar ist, wobei die Loss-Table (161) mittels einer Extrapolationseinheit (16) dynamisch und entsprechend der Segmentierung generierten Daten basierend auf der Datenbankstruktur chronologisch ergänzbar ist.

## Beschreibung

Die vorliegende Erfindung betrifft eine funktionelle Datenbankstruktur für dynamische Datenerfassungssysteme automatisierter und/oder teilweise automatisierter Tarifierungsvorrichtungen bei ein- oder mehrstufigen Schadensdeckungssystemen, mittels welcher eine mit Erfassungseinheiten des Datenerfassungssystem erfasste Vielzahl von historischen Schadensdatensrekords wechselseitig zuordenbar sind und wobei ein Schadensdatensrekord mindestens in Abhängigkeit eines Ereignisdatum in einer Speichereinheit abspeicherbar ist.

Tarifierungsverfahren sind im Stand der Technik viele und seit langem bekannt. Bei den Verfahren spricht man auch häufig von Erfahrungstarifierung. Erfahrungstarifierung bezieht sich im Stand der Technik auf Werteentwicklungen von Parametern von Ereignissen, die sich in einem bestimmten Jahr, dem Anfallsjahr oder Anfangsjahr, zum ersten Mal ereignen, und deren Folgen sich über mehrere Jahre fortpflanzen, den sog. Entwicklungsjahren. Allgemeiner ausgedrückt ereignen sich die Ereignisse zu einem bestimmten Zeitpunkt und entwickeln sich in vorgegebenen Zeitintervallen. Die Ereigniswerte des gleichen Ereignisses zeigen dabei über die verschiedenen Entwicklungsjahre oder Entwicklungszeitintervalle eine abhängige zeitrückbezogene Entwicklung. Die Erfahrungstarifierung der Werte findet durch Extrapolation bzw. den Vergleich mit der Werteentwicklung bekannter ähnlicher, zeitlich zurückliegender Ereignisse statt. Ein typisches Beispiel im Stand der Technik ist die mehrjährige Erfahrungstarifierung anhand von Schadenfällen, z.B. des Zahlungsstandes Z oder des Reservestandes R eines Schadensfalles bei Versicherungsgesellschaften oder Rückversicherern. Bei der Erfahrungstarifierung von Schadensfällen kennt ein Versicherungsunternehmen die Entwicklung jedes einzelnen Schadensfalls vom Zeitpunkt der Schadensmeldung bis zum aktuellen Stand oder bis zur Regulierung. Bei der Erfahrungstarifierung liegt die Begründung der klassischen Credibility-Formel durch ein stochastisches Modell etwa 30 Jahre zurück; seitdem sind zahlreiche Varianten des Modells entwickelt worden, so dass man heute von einer eigentlichen Credibility-Theorie sprechen kann. Das Hauptproblem bei der Anwendung von Credibility-Formeln bilden die unbekannten Parameter, die durch die Struktur des Bestandes bestimmt sind. Als Alternative zu bekannten Schätzverfahren bietet sich im Stand der Technik z.B. auch spieltheoretische Ansätze an: Der Aktuar oder Versicherungsmathematiker kennt Schranken für die Parameter und bestimmt die optimale Prämie für den ungünstigsten Fall. Die Credibility-Theorie umfasst auch eine Reihe von Modellen zur Reservierung für Spätschäden. Dabei gibt es eine Vielfalt von Reservierungsverfahren, die, anders als die Credibility-Formel, nicht von unbekannten Parametern abhängen. Auch hier umfasst der Stand der Technik Verfahren durch stochastische Modelle, die die Erzeugung der Daten beschreiben.

Wie erwähnt liegt eines der Hauptprobleme des Standes der Technik, darin, dass Daten für Tarifierungsvorrichtungen meist nur bruchstückhaft oder in manchen Fällen sogar manipuliert und/oder falsch erfasst vorliegen. Dieser Mangel erlaubt bis heute keine vollständige Automatisierung auf diesem Gebiet, mit all den damit zusammenhängenden Problemen, wie Zeit-, Mitarbeiter- und Kostenaufwand, Fehleranfälligkeit, Mitarbeiter bzw. Aktuar/Underwriter-spezifische Tarifierung etc. Diese Nachteile führen auch direkt zu weiteren technischen Problemen bei den Schadensdeckungssystemen, wie z.B. bei der zuverlässigen, nach einheitlichen Kriterien reproduzierbaren Bestimmung der Unterlegungshöhen etc. Basierend auf der übrigen Automatisierung auf diesem Gebiet entstand besonders seit den 90-er Jahren so ein langgehegter Bedarf bei der entsprechenden Industrie nach zuverlässigen Schadensdaten-Systemen bzw. damit zusammenhängenden Schadensdatenerfassungssystemen. Je umfassender die strukturierten Informationen der aufgetretenen Schäden sind, umso optimaler können Tarifierungsvorrichtungen eingesetzt werden und desto eher lassen sie sich automatisieren. Ganz allgemein gilt: 1. Für Tarifierungstools sollten idealerweise 100 % Schadendaten von Grund auf zur Verfügung stehen, unabhängig davon am Schaden beteiligt ist oder nicht und welche Art von System zur Schadensdeckung eingesetzt wird. 2. Grosschäden treten meist mit kleinen Frequenzen auf. Die entsprechenden Daten die aus herkömmlichen Datensystemen zur Verfügung stehen, sind für die Belange der Tarifierungsvorrichtung insbesondere für deren Automatisierung ungenügend. Es fehlten insbesondere an schadensdeckungssystemfremden Schäden, an denen das spezifische System nicht beteiligt ist/war, sowie an einer sauberen Schadensentwicklung über die Zeit hinweg. 3. Die Benutzer bzw. Klienten von Schadensdeckungssystemen stellen normalerweise ihre Schadengeschichte im Rahmen einer Vertrags-Anfrage oder -Erneuerung als Grundlage für die Vertragsgestaltung zur Verfügung. Diese Daten erlauben über die Zeit gesehen (da sie zum Teil jährlich geliefert werden) ein nur ungenaues Abbild nicht nur der effektiven Schadenhöhen und Frequenzen, sondern auch der Schadenentwicklung. 4. Im Stand der Technik gibt es häufig eine unklare Verknüpfung zwischen Schadensdatensystemen / Schadensdatenerfassungssystemen und Schadenadministrations- und/oder Schadenabwicklungs-Systemen und/oder der Verbindungen der Schäden zu Schadensdeckungsübertragungsbedingungen, wie z.B. entsprechende Verträge etc..

Es ist eine Aufgabe der vorliegenden Erfindung, ein neues System und Verfahren vorzuschlagen, das automatisiert entsprechende Daten erfassen kann, dynamisch ergänzen kann und erlauben über die Zeit gesehen (da die Daten meist nur unregelmässig und/oder in grossen Zeitintervallen erfassbar sind) ein genaues, konsistentes Abbild nicht nur der Schadenhöhen und Frequenzen, sondern auch der Schadenentwicklung zu bestimmen. Das System soll auch die Möglichkeit ausweisen, Inkonsistenten oder anderweitig fehlerhafte Daten automatisch zu detektieren und falls gewünscht zu korrigieren oder zu löschen und/oder einen entsprechenden Request an Erfassungseinheiten zur Kontrolle zu stellen bzw. Alert-Meldungen zu generieren. Insbesondere soll das System und/oder Verfahren die oben angeführten Nachteile nicht aufweisen.

Gemäß der vorliegenden Erfindung werden diese Ziele insbesondere durch die Elemente der unabhängigen Ansprüche erreicht. Weitere vorteilhafte Ausführungsformen gehen außerdem aus den abhängigen Ansprüchen, der Beschreibung und den Zeichnungen hervor.

Insbesondere werden diese Ziele durch die Erfindung dadurch erreicht, dass mittels der funktionelle Datenbankstruktur für dynamische Datenerfassungssysteme automatisierter und/oder teilweise automatisierter Tarifierungsvorrichtungen bei ein- oder mehrstufigen Schadensdeckungssystemen eine mit Erfassungseinheiten des Datenerfassungssystem erfasste Vielzahl von historischen Schadensdatensrekords wechselseitig zuordenbar sind, wobei ein Schadensdatensrekord mindestens in Abhängigkeit eines Ereignisdatum in einer Speichereinheit abspeicherbar ist, dass mittels ersten dynamisch generierbaren Datenelementen Schadensentwicklungsparameter einem entsprechenden Schadensdatenrekord zuordenbar und abspeicherbar sind, wobei die Schadensentwicklungsparameter mittels eines ersten Filtermoduls basierend auf erfassten Daten generierbar sind, dass mittels zweiten dynamisch generierbaren Datenelementen Ereigniskorrelationsdaten aus den erfassten Daten zuordenbar und abspeicherbar sind, wobei die Ereigniskorrelationsdaten mittels einer entsprechenden dynamischen Verknüpfung mit Batchdatenrekords einer Lookuptable vergleichbar sind, welche Batchdatenrekord mindestens Schadensursachendaten umfassen, und wobei die Ereigniskorrelationsdaten mittels eines zweites Filtermodul filterbar sind, dass mittels dritten dynamisch generierbaren Datenelementen betriebsartspezifische und/oder lokationsspezifische Segmentierungsparameter einem jeweiligen Schadensdatenrekord zuordenbar und abspeicherbar ist, wobei die betriebsartspezifische und/oder lokationsspezifische Segmentierungsparameter mittels einer Exposureeinheit bestimmbar sind und wobei mittels der bestimmten Segmentierungsparameter die erfassten Daten segmentierbar und normierbar sind, und dass mittels vierten Datenelementen eine Vielzahl von benutzerspezifischen Loss-Tables generierbar ist, wobei das Schadensdatenrekord mindestens einer bestimmten Loss-Table zuordenbar ist und wobei die Loss-Table mittels einer Extrapolationseinheit dynamisch und entsprechend der Segmentierung generierten Daten chronologisch ergänzbar ist. Dies hat u. a. den Vorteil, dass die funktionelle Datenbankstruktur erstmals technisch überhaupt eine vollständige Automatisierung von Tarifierungsvorrichtungen für entsprechende Schadensdeckungssysteme erlaubt. Erst durch die erfindungsgemässen entsprechenden dynamischen und/oder statischen Zuordnungen und Verknüpfungen der Datenelemente als Gesamtheit werden die technischen, notwendigen Voraussetzungen zur Realisierung eines entsprechenden Systems geliefert. Es kann als lang gehegtes Bedürfnis der Industrie betrachtet werden, eine solche Automatisierung der Datenerfassung und damit der Tarifierungsvorrichtungen bzw. des ganzen Systems zu ermöglichen, da die Zuordnung und Erfassung der Daten durch Mitarbeiter nicht nur Arbeitskräfte, Zeit und Geld bindet und verschlingt, sondern natürlicherweise auch um ein vielfaches Fehleranfälliger ist. Wie erwähnt ermöglicht die erfindungsgemässe funktionelle Datenbankstruktur erstmals eine wirkliche Automatisierung und Systematisierung der Datenerfassung und/oder Tarifierung mittels eines Systems. Mit anderen Worten werden mittels der erfindungsgemäßen funktionellen Datenbankstruktur eine neue technische Wirkung und ein technisches Zusammenwirken mit den übrigen Vorrichtungskomponenten erzielt, die weit über das bisher Bekannte hinausgeht. Mit den üblichen Systemen und Verfahren des Stands der Technik war es weiter bis jetzt ohnehin kaum möglich, die heute anfallenden Datenmengen überhaupt zu erfassen, geschweige denn dynamisch zu erfassen, da u. a. die notwendigen Datensätze in der Realität der Schadensdeckungssysteme kaum je vollständig an ein Schadensdeckungssystem übermittelt werden. Gleichzeitig zur unvollständigen Übermittlung kommen häufig fehlerhafte Daten, die bis anhin schwer oder nur unter grossem Aufwand detektierbar und korrigierbar waren. Gerade dem Fachmann auf dem Gebiet ist hinlänglich bekannt, was unvollständige, unregelmäßig erfaßbare und fehlerhafte Datenerfassung für die Automatisierung eines solchen Systems bedeuten. Herkömmliche Recheneinheiten mit dem üblichen Zusammenwirken bekannter Komponenten, insbesondere bekannter Hardware- und/oder Softwarekomponenten sind solchen Problemen in keiner Weise gewachsen. Erst die organisierende und/oder selbstorganisierende funktionelle Datenstruktur erlaubt die erfindungsgemäße Automatisierung. Neben der Automatisierung hat die Erfindung weiter u. a. den Vorteil, dass die Datensätze, wie erwähnt dynamisch ergänzt werden können. Dies ist eben deshalb wichtig, da die Daten meist nur unregelmässig und/oder in grossen Zeitintervallen von den Benutzern des Schadensdeckungssystems erfasst werden können. Das erfindungsgemässe System kann somit erstmals automatisiert und dynamisch ein genaues, konsistentes Abbild nicht nur der Schadenhöhen und Frequenzen, sondern auch der Schadenentwicklung liefern.

In einer Ausführungsvariante sind mittels fünften dynamisch generierbaren Datenelementen mit dem erste Filtermodul erste, variable Wahrscheinlichkeitsparameter zuordenbar und abspeicherbar, welche Wahrscheinlichkeitsparameter ein Mass für die Übereinstimmung der erfassten Daten mit den gespeicherten Schadensdatenrekords abspeicherbar umfassen, wobei ein neues Schadensdatenrekord generierbar ist, falls der Wahrscheinlichkeitsparameter für alle Schadensdatenrekords unter einem bestimmbaren Schwellwert liegt. Ebenso können als Ausführungsvariante mittels sechsten dynamisch generierbaren Datenelementen mit dem zweiten Filtermodul zweite, variable Wahrscheinlichkeitsparameter zuordenbar und abspeicherbar sein, welche Wahrscheinlichkeitsparameter ein Mass für die Übereinstimmung der erfassten Daten mit den gespeicherten Batchdatenrekords abspeicherbar umfassen, wobei ein neues Batchdatenrekord generiert wird, falls der Wahrscheinlichkeitsparameter für alle Batchdatenrekords unter einem bestimmbaren Schwellwert liegt. Das System kann z.B. eine Kontrolleinheit mit einem Interface umfassen, wobei basierend auf einen Request und/oder nach einem bestimmbaren Zeitintervall mittels einer Kontrolleinheit Daten an eine Tarifierungsvorrichtung übermittelt werden und wobei die Daten mindestens Schadendaten eines Schadensdatenrekords einer spezifischen Loss-Table umfassen. Diese Ausführungsvarianten haben u. a. neben der konkreten Ausführbarkeit den Vorteil, dass mittels der veränderbaren Schwellwerte dynamisch auf Art und Qualität der Daten eingegangen werden kann, bzw. vom System reagiert werden kann. Dies war so bis jetzt im Stand der Technik in keiner Weise möglich. Weiter haben diese Ausführungsvarianten u. a. den Vorteil, dass die Tarifierung dynamisch basierend auf der aktuellen Datenlage erfolgen kann und/oder angepasst werden kann. Auch dies war so im Stand der Technik so bis jetzt nicht möglich.

In einer weiteren Ausführungsvariante ist mittels siebten dynamisch generierbaren Datenelementen basierend auf der Abweichung einer betriebsspezifischen Loss-Table zu abgespeicherten Loss-Tables mindestens ein variabler Deviationswertparameter einer betriebsspezifischen Loss-Table zuordenbar und abspeicherbar ist, wobei der mindestens eine variabler Deviationswertparameter mittels einer Triggervorrichtung triggerbar ist und wobei betriebsspezifische und/oder schadensdeckungssystemsspezifische Anlagemittel basierend auf dem siebten Datenelement aktivierbar sind und/oder Alertmeldungen an Erfassungseinheiten des Datenerfassungssystem übermittelbar sind. Das siebte dynamische generierte Datenelement ist z.B. mittels eines statistischen Analysemoduls mit einem Interface zum Aggregieren und Analysieren betriebsspezifischen Loss-Tables und/oder kumulierte betriebsspezifische Loss-Tables bestimmbar, wobei mittels des Analysemoduls basierend auf den kumulierten betriebsspezifischen Loss-Tables der Deviationswert bestimmbar ist. Dies hat u. a. den Vorteil, dass das System Inkonsistenten oder anderweitig fehlerhafte Daten automatisch detektieren kann und falls gewünscht zu korrigieren oder zu löschen und/oder einen entsprechenden Request an Erfassungseinheiten zur Kontrolle zu stellen bzw. Alert-Meldungen zu generieren. Damit garantiert das System automatisiert erstmals die Konsistenz der zu tarifierenden Datensätze, insbesondere basierend auf vordefinierbaren Kriterien oder Kontrollverfahren. Dies kann z.B. auch mittels statistischem Kontrollmodule z.B. basierend auf Gauss-, Poissonverteilungen oder anderen entsprechenden Verteilungen oder χ²-Verfahren geschehen.

In einer Ausführungsvariante ist mittels achten dynamisch generierbaren Datenelementen mit dem Segmentierungsunit für unterschiedliche Betriebsarten jeweils eine Parametrisierung basierend auf erfassten betriebsartenspezifischen Daten dynamisch zuordenbar und abspeicherbar, wobei das Segmentierungsunit ein Netzwerkinterface zum Zugreifen auf mit Quelldatenbanken verbundenen Netzwerknodes über ein Netzwerk zum Erfassen betriebsartenspezifischer Daten umfasst. Dies hat u. a. den Vorteil, dass die Daten zur Tarifierung betriebsartenspezifisch aktualisiert und parametrisiert bzw. normiert werden können. Mit den Systemen und Verfahren des Stands der Technik war es bis jetzt ohnehin kaum möglich, solche Datenmengen überhaupt dynamisch zu erfassen, da z.B. bei einer statischen Parametrisierung neue kosten relevante Parameter nicht erfasst werden, was zu einer falschen Gewichtung der übrigen führen kann.

In einer anderen Ausführungsvariante sind mittels neunten dynamisch generierbaren Datenelementen mit einem Gewichtungsmodul des Normierungsunit die Schadensdatenrekords normierbar und mittels entsprechenden generierten und zugeordneten Gewichtungsfaktoren gegenseitig gewichtet den Schadensdatenrekords zuordenbar und abspeicherbar. Die Gewichtung kann z.B. mittels des Gewichtungsmoduls dynamisch basierend auf den betriebsartenspezifischen Daten durchgeführt werden, wobei periodisch und/oder auf Request die Gewichtung des Normierungsmoduls aktualisiert wird. Diese Ausführungsvariante hat u. a. den Vorteil, dass die Schadensdatenrekords und/oder die Normierung und/oder Segmentierung generalisiert werden können und damit auch einfach in beliebige andere Systeme und Anwendungen integriert werden können. Weiter hat die Ausführungsvariante u. a. den Vorteil, dass das System dynamisch (z.B. in Real-Time (Echtzeit)) veränderte Bedingungen, z.B. Markt-, Sozial-, Materialkostenbedingungen etc., berücksichtigt. Dies war bis jetzt so im Stand der Technik in keiner Weise möglich.

In einer weiteren Ausführungsvariante sind mittels zehnten dynamisch generierbaren Datenelementen mit dem Gewichtungsmodul gewichtete Länderindizes zuordenbar und abspeicherbar, wobei die gewichteten Länderindizes mittels des Gewichtungsmoduls basierend auf lokalisierten Datenbanken länderspezifisch und/oder betriebsartenspezifischer generierbar sind. Die Parametrisierung kann z.B. länderspezifisch basierend auf länderspezifischen Datenbanken bestimmbar sind. Diese Ausführungsvariante hat u. a. den Vorteil, dass länderspezifische Abhängigkeiten durch die länderspezifische Segmentierung bzw. Parametrisierung erstmals effektiv und/oder durch ein zentrales automatisiertes System möglich wird. Weiter hat diese Ausführungsvariante u. a. den Vorteil, dass mittels einer solchen Ausführungsvariante sich eine korrekte länderspezifische Gewichtung erreichen lässt, was ebenfalls im Stand der Technik so bis jetzt nicht möglich war. Durch die zentrale länderspezifische und/oder betriebsartspezifische Überwachung der Datenerfassung und/oder Tarifierung wird auch erstmals ein effektiver länder- und/oder regionenabhängiger Vergleich möglich, was neue Möglichkeiten für eine automatisierte dynamische Tarifierungsvorrichtungen ergibt.

In einer wieder anderen Ausführungsvariante sind mittels der bestimmten Segmentierungsparameter die erfassten Daten basierend auf der Datenbankstruktur segmentierbar und normierbar sind. Die einwirkende Datenbankstruktur kann auf der momentanen Ausprägung beruhen und/oder basierend auf einer Datenbankstruktur eines zurückliegenden Zeitpunktes. Diese Ausführungsvariante hat u. a. den Vorteil, daß die Datenbankstruktur selbst direkt auf die Vorrichtung und das damit bewirkte Verfahren einwirkt. Damit wird bei der Datenerfassungsvorrichtung eine rückgekoppelte technische Wirkung auf die Vorrichtungskomponenten bewirkt. Eine solche neue Einwirkung geht ebenfalls weit über das technisch bekannte des Standes der Technik hinaus.

An dieser Stelle soll festgehalten werden, dass sich die vorliegende Erfindung neben der erfindungsgemässen funktionellen Datenbankstruktur auch auf ein entsprechendes Verfahren und/oder entsprechendes System zur Ausführung dieses Verfahrens und auf ein entsprechendes Computerprogrammprodukt bezieht.

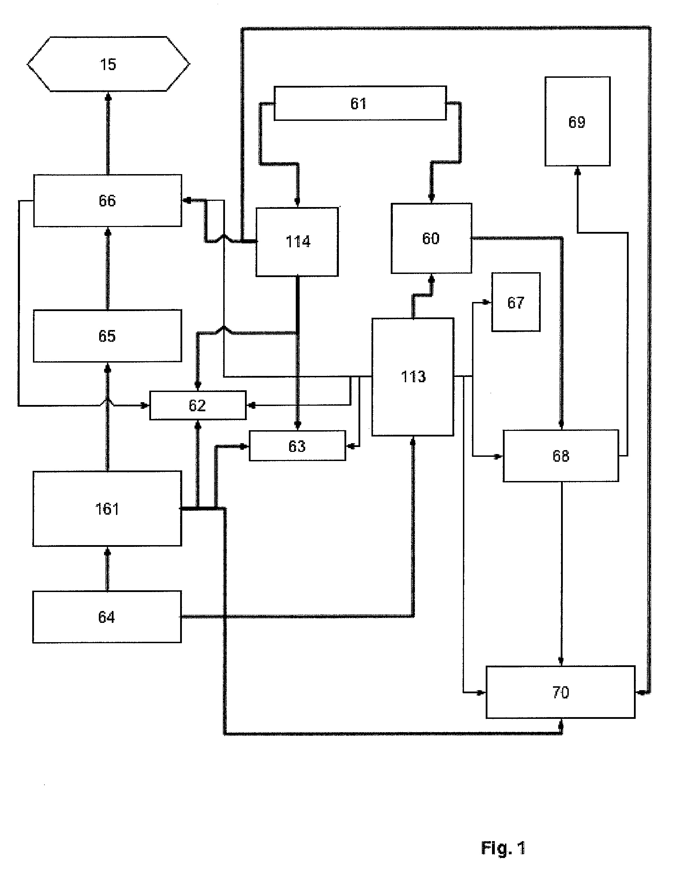

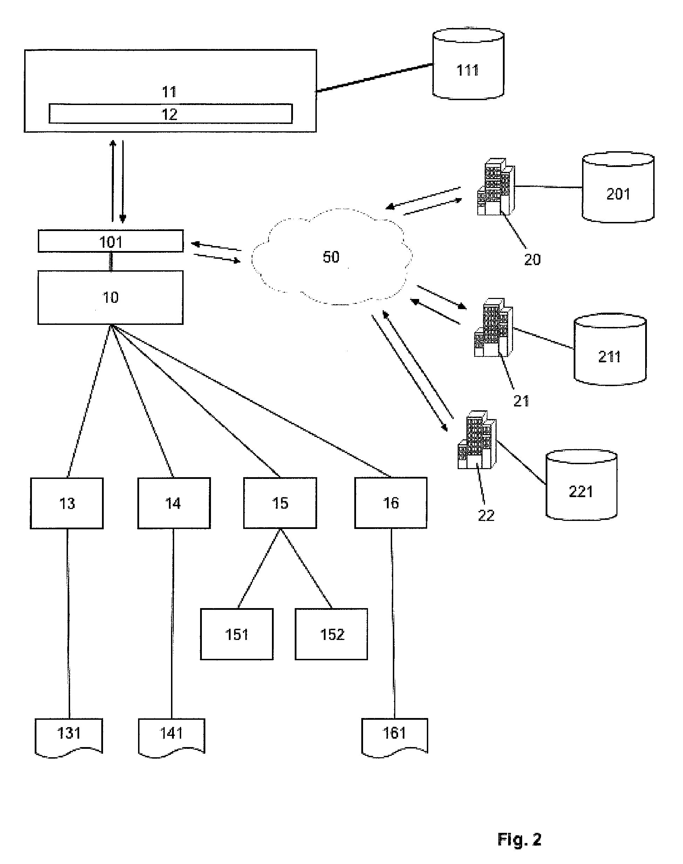

Nachfolgend wird eine Ausführung der vorliegenden Erfindung anhand eines Beispiels beschrieben. Das Beispiel der Ausführung wird durch die beigelegten Figuren 1 und 2 illustriert.

Figur 1 zeigt ein schematisches Blockdiagramm einer erfindungsgemäßen funktionelle dynamischen Datenbankstruktur und deren wechselseitiges Einwirken für ebenfalls dynamische Datenerfassungssysteme automatisierter und/oder teilweise automatisierter Tarifierungsvorrichtungen 12 bei ein- oder mehrstufigen Schadensdeckungssystemen 11. Mittels der funktionellen Datenbankstruktur sind eine mit Erfassungseinheiten 101 des Datenerfassungssystem 10 erfasste Vielzahl von historischen Schadensdatensrekords 111 wechselseitig zuordenbar.

Figur 2 illustriert ein schematisches Blockdiagramm eines System beruhend auf einer erfindungsgemäßen funktionellen Datenbank für eine dynamische, selbst-organisierende Datenerfassungsvorrichtung 10 für automatisierte oder teilweise automatisierte Tarifierungsvorrichtungen 12 bei ein- oder mehrstufigen Schadensdeckungssystemen 11 mit einem ersten Filtermodul 13, einem zweiten Filtermodul 14, einer Exposureeinheit 10 und einem Extrapolationsmodul 16.

Figur 1 und 2 illustrieren schematisch eine Architektur, die zur Realisierung der Erfindung verwendet werden kann. In diesem Ausführungsbeispiel umfasst die erfindungsgemässe funktionelle Datenbankstruktur bzw. das entsprechende, automatisierte, dynamische und/oder selbst-organisierende Datenerfassungssystem 10 für automatisierte oder teilweise automatisierte Tarifierungsvorrichtungen 12 bei ein- oder mehrstufigen Schadensdeckungssystemen 11 eine mittels Erfassungseinheiten 101 des Datenerfassungssystem 10 erfasste Vielzahl von historischen Schadensdatensrekords 111 umfasst. Unter Schadensdeckungssystemen 11 können als Spezialfall insbesondere Versicherungssysteme und Rückversicherungssysteme verstanden werden. Den Schadensdatensrekords 111 ist mindestens ein Ereignisdatum in einer Speichereinheit zugeordnet abgespeichert, d.h. beispielsweise der Zeitpunkt, an welchem sich das Ereignis, dass zum Schaden geführt hat, sich ereignet hat. Das Schadensdeckungssystem 11 kann die Tarifierungsvorrichtung 12 und/oder das Datenerfassungssystem 10 integriert umfassen. Es ist jedoch auch möglich, dass das Schadensdeckungssystem 11 und/oder die Tarifierungsvorrichtung 12 und/oder das Datenerfassungssystem 10 als voneinander unabhängige Netzwerkkomponenten mit entsprechendem Interface realisiert sind. In diesem Fall können z.B. diese Netzwerkkomponenten über ein Netzwerk 50 bidirektional oder unidirektional miteinander verbunden sein. Das Netzwerk 50 kann ein Kommunikationsnetz sein, dass beispielsweise ein GSM- oder ein UMTS-Netz, oder ein satellitenbasiertes Mobilfunknetz, und/oder ein oder mehrere Festnetze, beispielsweise das öffentlich geschaltete Telefonnetz, das weltweite Internet oder ein geeignetes LAN (Local Area Network) oder WAN (Wide Area Network) umfasst. Insbesondere kann es auch ISDN- und XDSL-Verbindungen umfassen. Zwischen den Netzwerkkomponenten können jegliche Art von Daten, insbesondere Multimediadaten übertragen werden. Solche Daten sind u. a. digitale Daten wie Texte, Graphiken, Bilder, Karten, Animationen, bewegte Bilder, Video, Quicktime, Tonaufnahmen, Programme (Software), programmbegleitende Daten und Hyperlinks oder Verweise auf Multimediadaten zu verstehen. Dazu gehören z.B. auch MPx (MP3) oder MPEGx (MPEG4 oder 7) Standards, wie sie durch die Moving Picture Experts Group definiert werden. In einer solchen Ausführungsvariante ist es z.B. auch möglich, das erfindungsgemässe Datenerfassungssystem 10 und/oder die Tarifierungsvorrichtung 12 mit integriertem Datenerfassungssystem 10 und/oder das Schadensdeckungssystem 11 mit den erfindungsgemässen Komponenten als Dienst im sinne eines Service Providers über das Netzwerk 50, insbesondere das weltweite Backbone-Netzwerk (Internet) anzubieten. Die Netzwerkkomponenten 10/11/12 könnten dann z.B. auch die entsprechenden Ver-/ Entschlüsselungsverfahren zur zugriffskontrollierten Datenübertragung und/oder Mittel zum Verrechnen der bezogenen Leistung umfassen. Die Filtermodule 13/14, die Exposureeinheit 15 sowie das Extrapolationsmodul 16 können entsprechend hardwaremäßig und/oder softwaremäßig realisiert sein.

Mittels eines ersten Filtermoduls 13 des Datenerfassungssystem 10 erfasste Daten werden mit gespeicherten Schadensdatenrekords 111 verglichen und entsprechend einem Schadensdatenrekord 131 zugeordnet. Jedes Schadensdatenrekord 111/131 umfasst chronologische und mittels des Filtermoduls 13 basierend auf den erfassten Daten generierbare Schadensentwicklungsparameter. Zur Zuordnung kann beispielsweise mittels des ersten Filtermoduls 13 ein erster, variabler Wahrscheinlichkeitsparameter für eine Übereinstimmung der erfassten Daten mit jedem der gespeicherten Schadensdatenrekords 111 bestimmt werden, wobei ein neues Schadensdatenrekord 131 generiert wird, falls der Wahrscheinlichkeitsparameter für alle Schadensdatenrekords 111 unter einem bestimmbaren Schwellwert liegt. Andernfalls, falls eine eindeutige Zuordnung möglich ist, muss natürlich kein neuer Schadenrekord 131 erzeugt werden, sondern ein bereits vorhandenes Schadenrekord 111/131 wird den Daten zugeordnet. Unter Schadensentwicklungsparameter sind bestimmbare Parameter gemeint, die z.B. zu bestimmten Zeitpunkten oder in periodischen Zeitintervallen das zeitliche Verhalten wie z.B. Schadenshöhe, Rückstellungen insbesondere für anstehende Gerichtsverfahren etc. zeigen.

Mittels eines zweiten Filtermoduls 14 werden Ereigniskorrelationsdaten aus den erfassten Daten bestimmt, die gefilterten Ereigniskorrelationsdaten mit Batchdatenrekords 141 einer Lookuptable verglichen und das Schadensdatenrekord 131 entsprechend einem Batchdatenrekord 141 der Lookuptable zugeordnet, wobei ein Batchdatenrekord 141 mindestens Schadensursachendaten umfasst. Beispielsweise kann mittels des zweiten Filtermoduls 14 ein zweiter variabler Wahrscheinlichkeitsparameter für eine Übereinstimmung der erfassten Daten mit jedem der gespeicherten Batchdatenrekords 141 bestimmt werden, wobei ein neues Batchdatenrekord 141 generiert wird, falls der Wahrscheinlichkeitsparameter unter einem bestimmbaren Schwellwert liegt, andernfalls wird das Schadenrekord 131 einem bereits abgespeicherten Batchdatenrekord 141 zugeordnet.

Mittels eines Segmentierungsunits 151 einer Exposureeinheit 15 werden basierend auf den erfassten Daten betriebsartspezifische und/oder lokationsspezifische Segmentierungsparameter des Schadensdatenrekords 131 bestimmt und basierend auf den bestimmten Segmentierungsparameter mittels eines Normierungsunits 152 der Exposureeinheit 15 werden die erfassten Daten segmentiert und normiert. Der Schadensdatenrekord 131 wird einer benutzerspezifischen Loss-Table 161 zugeordnet, wobei die Loss-Table 161 mittels einer Extrapolationseinheit 16 dynamisch und entsprechend der Segmentierung generierten Daten chronologisch ergänzt. Die Normierungsunit 152 kann beispielsweise ein Gewichtungsmodul zum Normieren der Schadensdatenrekords 111/131 umfassen, wobei die Schadensdatenrekords 111/131 mittels variabler Gewichtungsfaktoren gewichtet werden. Die Gewichtungsfaktoren können z.B. den Schadensdatenrekords 111/131 zugeordnet abgespeichert werden. Die Gewichtung kann z.B. mittels des Gewichtungsmoduls dynamisch basierend auf den betriebsartenspezifischen Daten durchgeführt werden, wobei periodisch und/oder auf Request die Gewichtung des Normierungsmoduls 152 aktualisiert wird. Das Gewichtungsmodul kann insbesondere gewichtete Länderindizes umfassen, wobei die gewichteten Länderindizes mittels des Gewichtungsmoduls basierend auf lokalisierten Datenbanken länderspezifisch und/oder betriebsartenspezifischer generiert werden. Unter Länder und/oder Regionen ist hier u. a. jede für eine unterschiedliche Segmentierung bzw. Parametrisierung und/oder Normierung sinnvolle Abgrenzung von geographischen und/oder demographischen Gebieten zu verstehen. Insbesondere kann es ebenfalls sinnvoll sein, dass die Segmentierung und/oder Normierung entsprechend lokalisierter betriebsartenspezifischer Daten und/oder Metadaten bestimmt werden.

Figur 1 illustriert eine mögliche innere Struktur bzw. Architektur der erfindungsgemässen funktionellen Datanbankstruktur. Gleiche Referenznummer in Figur 1 und 2 referenzieren auch die gleichen Systemkomponenten. Die Referenznummer 16 bezeichnet die Exposureeinheit und Referenznummer 113 referenziert das Schadensdatenrekords. Mittels der Exposureeinheit wird ein Vergleichsmass (Segmentierungsparameter/Gewichtungsparameter) für die Exponiertheit einer Firma gegenüber parametrisierbaren Risiken gebildet und das Schadenrekord 113 kann damit entsprechend normiert werden. Das Vergleichsmass kann neben der Schadenserfahrung der Branche, insbesondere auch Umsatzzahlen (Turnover oder auch Revenue), sprich Key Financials wie Sales oder Assets umfassen. Diese werden nach Business Segmenten und geographischen Kriterien alloziert und gewichtet. Mittels der Exposureeinheit 15 können insbesondere Exposure-Measures Sales, Assets, GPPE (Gross Property, Plant & Equipment) und NPPE (Net Property, Plant & Equipment) nach frei definierbaren Kategorien für Business und Geographie segmentiert werden. Dies kann z.B. erfindungsgemäss auch die Möglichkeit bieten, die Segmentierung je Company über entsprechende Ausgabemittel zu visualisieren und das mittlere Exposurewachstum automatisiert anzuzeigen. Anschliessend kann ein Output generiert werden. Es ist darauf hinzuweisen, dass es sinnvoll sein kann, wenn Exposure-Daten für ein gesamtes Segment erfassbar sind, sprich von allen diesem zugehörigen Firmen benötigt. Hierzu kann z.B. auch ein entsprechendes Company Datenrekord erstellt werden. Die Exposureeinheit 15 kann z.B. zusätzlich ein Interface auf öffentlich zugängliche Datenbanken wie z.B. Thomson Analytics (Wordscope Full Company Report) umfassen. Die Thomson Analytics Datenbank substituiert den bis dahin häufig verwendeten, aber nicht mehr aktualisierten Global Researcher Worldscope. Sie enthält Daten für eine grosse Zahl der börsenkotierten Firmen dieser Welt. Die Referenznummer 60 verweist auf einen Batch, der zusammen mit dem Batchdevelopment oder Batchentwicklung 61 das Batchdatenrekord 114 ergeben. Schäden/Losses bzw. die entsprechenden Schadenrekords 111/113 mit der gleichen Ursache werden zu einem Batch (Serienschaden) zusammengefasst. Ein Batch setzt sich aus mehreren Losses, die auf den gleichen Mangel oder Fehler, Entwicklungs-, Konstruktions-, Produktions- oder Instruktionsfehler, auf die gleiche mangelhafte Wirkung eines Produktes oder Stoffes oder auf die gleiche Handlung bzw. Unterlassung zurückzuführen sind, zusammen. Die Schadenkosten sind von der Tarifierungsvorrichtung 12 entsprechend zu summieren, wobei nur ein Deductible und ein entsprechendes Limit angewandt werden kann. Zudem kann dem Batch bzw. dem entsprechenden Batchdatenrekord ein Policy Jahr zugewiesen, unter welchem die Batch-Kosten abgerechnet werden (Trigger Jahr, zugewiesenes Policy Jahr). Typischerweise fallen Batches unter die Produktehaftpflicht (Product Liability), sie sind meistens im Pharma- oder Chemie Sektor anzutreffen sind. Die Erfassung von Batchdatenrekords im erfindungsgemässen Datenerfassungssystem 10 kann für bestimmte Ausführungsformen die gleiche Struktur aufweisen, wie die Schadensrekords.

Das Schadensdatenrekord kann einen bestimmbaren Trigger Jahr Parameter umfassen, welcher festlegt, in welchem Policy Jahr die aggregierten Batch-Kosten verrechnet werden. Beispielsweise können je nach Policy Wording verschiedene Methoden angewandt werden: (i) Die Roll back clause setzt den Trigger-Jahr-Parameter auf das Jahr des ersten bekannten Claims. Wird die Roll forward clause angewandt, wird das Trigger Jahr auf das Jahr gesetzt, in welchem der Serien-Schaden als solcher erkannt wird. (ii) Bei einer Loss notification option wird der Trigger-Jahr-Parameter rückwirkend vom Versicherten festgesetzt. Schadenansprüche, welche sich auf denselben Event beziehen, aber vor dem gesetzten Trigger Year erhoben wurden, werden nicht in den Batch aufgenommen. (iii) Die Integrated Occurrence clause kombiniert die Roll back und Roll Forward Clause. Schadenansprüche werden vom ersten bekannten Fall bis zum letzten (ev. zukünftigen) auf einen bestimmten Trigger-Jahr-Parameter gesetzt. Die Referenznummer 62 bezieht sich auf den Industrie (SCI). Dem Batch wird die betroffene Industriesegmentierung mittels Segmentierungseinheit 151 zugeordnet. Der Code muss nicht zwingend mit dem Primary SIC Code oder dem zugewiesenen SPI des Versicherten übereinstimmen. Es können alle Schäden einer Company und somit einer Industry (SPI) zugeordnet werden. Viele grössere Firmen sind jedoch in mehreren Industrien tätig. Dort kann eine weitere Segmentierung in mehrere SPI mittels des Systems durchgeführt werden. Der SPI einer Company kann z.B. auch aus Datenbanken wie Manhattan und/oder CMS (Client Management System) und/oder UW übertragen werden.

Die Referenznummer 161 bezieht sich auf eine Loss-Table. Eines der Hauptkriterien für die Abgrenzung von Loss-Tables wird erfindungsgemäss mittels des Line of Business (LOB) Parameter mit der Referenznummer 63 erreicht. Die Line of Business Parameter können z.B. Feuer, nicht autorisiertes Handeln, persönliche Umfälle, generelle Haftung, Produkthaftung, Rückrufe von Produkten, etc. etc. umfassen. Die Referenznummer 64 bezeichnet Loss-Table Entwicklungsparameter, während die Referenznummer 65 den Loss Table Cover referenzieren. Pro Kalenderjahr und pro Firma kann z.B. nur ein Loss Table Cover 65 erstellt werden. Ausnahmen können sinnvoll sein, falls zum Beispiel von einer Firma Loss Histories alle 3 Monate in guter Qualität und in File Form erfassbar ist. Falls es eine signifikante Änderung für das Loss Table Development 64 gibt, muss ebenfalls ein Loss Table Cover 65 erstellt werden. Ein Loss Table Cover 65 enthält ein oder mehrere Loss Tables 161 der Firma oder deren Subsidaries desselben Jahres. Hierbei ist es möglich einerseits die Reporting Company mit den nötigen Informationen anzugeben, andererseits hat man die Möglichkeit, eine Affected Company zu kennzeichnen. Beispielsweise liegt eine Losshistory von Celanese vor, die berichteten Schäden gehören aber Höchst Celanese AG (Merge von Celanese). In dem Fall wird als Reporting Company Celanese angegeben, und als Affected Company Höchst Celanese AG erfasst. Wenn pro Jahr mehrere Evaluationen vorhanden sind, kann das System z.B. jeweils die neuste nehmen. Mit der Referenznummer 66 wird schliesslich die spezifische Firma oder Company oder einen entsprechenden Code bezeichnet. Mittels Modul 67 kann einem Schadensdatenrekord 113 ein oder mehrere Claim Codes 67 zugeordnet werden. Mittels Modul 68 wird auf das zugrundeliegende Ereignis bzw. die entsprechenden Schadensereignisdaten 68 referenziert. In analoger Weise können mittels Modul 68 einem Event oder Schadensereignis 68 ein oder mehrere Claim Codes 69 zugeordnet werden. Die Referenznummer 70 bezieht sich auf die geographische Segmentierung mittels des Systems 10. Die Segmentierung kann z.B. auch aus einer verfügbaren Geodatenbank entnommen werden und entsprechenden Location-Id-Parameter zugeordnet sein. Beispielsweise sind folgende Hierarchie-Level der Parameter vorstellbar: (i) Länder (Countries, Admin0): Locid_admin0; (ii) Bundesländer, Kantone, Bundesstaaten etc. (States/Provinces): Locid_admin1; (iii) Landkreise, Counties, Admin2, etc.: Locid_admin2; (iv) Städte/Orte (Places/Locations: Locid_place; (v) Political Groups (Währungsgemeinschaften u.ä.): Locid_polgroup; (vi) Regionen (Kontinente, Ländergruppen, Ozeane etc.): Locid_region etc. Es soll jedoch ausdrücklich darauf hingewiesen werden, dass erfindungsgemäss es sinnvoll sein kann, mittels des entsprechenden Analysemoduls die Segmentierung dynamisch zu bestimmen, wie in dieser Beschreibung weiter unten beschreiben wird.

Als Ausführungsvariante kann z.B. mittels des Segmentierungsunit 151 für unterschiedliche Betriebsarten jeweils eine Parametrisierung basierend auf erfassten betriebsartenspezifischen Daten dynamisch bestimmt werden und in einer Speichereinheit der entsprechenden Betriebsart zugeordnet abspeichert werden, wobei das Segmentierungsunit 151 ein Netzwerkinterface zum Zugreifen auf mit Quelldatenbanken verbundenen Netzwerknodes über ein Netzwerk 50 zum Erfassen betriebsartenspezifischer Daten umfasst. Die betriebsartenspezifischen Daten können an unterschiedlichen Orten in unterschiedlichen Netzen oder lokal für das Datenerfassungsystem 10 zugreifbar abgespeichert sein. Die letztgenannten Netzwerke können z.B. ein LAN (Local Area Network) oder ein WAN (Wide Area Network), das Internet, Broadcastkabelnetze, PSTN, PLMN o.ä. umfassen. Zum Speichern und/oder detektieren relevanter betriebsartenspezifischer Daten können mittels des Datenerfassungssystems 11 Metadaten erzeugbar sein. Die Metadaten können z.B. anhand einer inhaltsbasierenden Indexingtechnik extrahiert werden und Stichworte, Synonyme, Verweise auf Multimediadaten (z.B. auch Hyperlinks), Bild- und/oder Tonsequenzen etc. umfassen. Solche Systeme sind im Stand der Technik in unterschiedlichsten Variationen bekannt. Beispiele dafür sind die US-Patentschrift US 5 414 644, welche eine Drei-File-Indexingtechnik beschreibt oder die US-Patentschrift US 5 210 868, welche bei dem Indexieren von Daten und Extrahieren der Metadaten zusätzlich auch Synonyme als Such-Keywords abspeichert. Im vorliegenden Ausführungsbeispiel können die Metadaten aber auch mindestens teilweise dynamisch (in Real-Time) basierend auf Benutzerdaten eines Benutzerprofils erzeugt werden. Dies hat z.B. den Vorteil, dass die Metadaten immer die für den Benutzer sinnvolle Aktualität und Genauigkeit besitzen. Vom Benutzer des Schadensdeckungssystems 11 kann folglich eine Art Feedbackmöglichkeit zum Schadensdeckungssystem 11 und/oder der Tarifierungsvorrichtung 12 und/oder dem Datenerfassungssystem 10 existieren, die die Extraktion direkt beeinflussen kann. Veränderte Benutzerbedingungen können damit direkt Einfluss auf das Verhalten der Tarifierungsvorrichtung (Unterlegungshöhenparameter, Prämienparameter etc.) haben und damit eine dynamische Tarifierung, insbesondere auch eine Real-Time-Tarifierung erlauben. Unter Unterlegungshöhen sind Parameter zu verstehen, welche das materielle Risiko das mit einem Schaden einhergeht wiedergeben. Dies können z.B. Geldbetragswerte sein, müssen es aber nicht notwendigerweise. Häufig werden mit den Unterlegungshöhenparametern der maximal eintretbare Schaden referenziert, i.e. beispielsweise den Geldbetragswert, den es bei einem Totalschaden braucht, um eine spezifische Vorrichtung komplett neu aufzubauen. Die Unterlegungshöhenparameter können aber auch einfach die vereinbarte Versicherungssumme wiedergeben bzw. die entsprechenden z.B. zwischen einem Schadensdeckungssystem erster Stufe und einem Benutzer und/oder zwischen einem Schadensdeckungssystem erster Stufe und dem Schadensdeckungssystem zweiter Stufe synchronisierten Parameter. Ebenso können die Vergütungsparameter und/oder Prämienparameter z.B. auf die entsprechenden vereinbarten Prämien referenzieren und reine Geldbetragswerte umfassen. Allgemein entsprechen die Vergütungsparameter jedoch nur Parameter zur Übertragung entsprechender Leistungen und/oder Leistungsansprüche. Dies ist mit keinem System des Standes der Technik so möglich. Umgekehrt bedeutet dies auch, dass das erfindungsgemässe System sich selbst dynamisch an veränderte Bedingungen anpasst, also vollkommen selbst-organisierend gegen aussen wirkt. Bei der Netzwerksuche relevanter betriebsartenspezifischer Daten können insbesondere sog. Agents eingesetzt werden. Das genannte Benutzerprofil kann anhand von Benutzerinformationen erstellt und im Datenerfassungssystem 10 dem Benutzer zugeordnet abgespeichert werden. Die betriebsartenspezifischer Daten können auch lokal beim Benutzer (z.B. bei der mittels des Schadensdeckungssystem 11 zu deckenden technischen Anlage) mittels lokaler Erfassungseinheiten detektiert und an das Datenerfassungssystem 10 automatisiert und/oder teilweise automatisiert übermittelt werden. Das Benutzerprofil kann z.B. permanent einem bestimmten Benutzer zugeordnet abgespeichert bleiben.

Die Segmentierung und/oder genannte Parametrisierung kann z.B. dadurch erfolgen, dass die Normierungsfaktoren basierend auf technischer Relevanz im Prozess und/oder monetäre Schwellwerte wie beispielsweise Kostenrelevanz ((lokale) Materialkosten, Arbeitnehmerkosten, Transportkosten, Verfügbarkeit technisch qualifizierter Arbeitskräfte und/oder Spezialisten etc.) für die Kostenunterlegungshöhe für eine Rekonstruktion gesetzt werden. Für Kraftwerke könnte sich so als Beispiel eine mögliche weitere Segmentierung und entsprechende Normierung in Gebäude (Größe, Nutzungsart, Konstruktion etc.), Energieart (Steinkohle, Braunkohle, Kohlekoks etc.), Kesselanlagen, Turbinen, Generatoren, Rauchgasreinigung (Entstaubung, Entschwefelung, Entstickung etc.), Hilfs- und Nebenanlagen (Wasserstofferzeugung, Brennstoffaufbereitung, Lagerbereiche, etc.) ergeben. Die einzelnen Parameter der Parametrisierung und/oder Segmentierung erlauben z.B. exakte Kostenberechnungen mittels den Tarifierungsvorrichtungen 11 durchzuführen. Sowohl die Kostenberechnungen der einzelnen Parameter als auch die Parametrisierung selbst, kann je nach Ausführungsvariante dynamisch durch das Datenerfassungssystem 10 basierend auf den aggregierten betriebsartenspezifischen Daten geschehen. Wie erwähnt kann die Parametrisierungen lokal abhängig sein vom Standort der durch das Schadensdeckungssystem 11 zu deckenden Anlage und/oder Vorrichtung. Als Ausführungsvariante kann das System die Parametrisierung dynamisch oder statisch unterschiedlichen Regionen anpassen. So unterscheiden sind die durchschnittlichen Kosten für Bauarbeiter (Lohnkosten) in Zentral- und Osteuropa (z.B. in der Tschechischen Republik oder Polen) grundsätzlich zu denen westeuropäischen Industriestaaten (wie Deutschland oder der Schweiz). Die Unterschiede sind dabei nicht als statisch anzusehen sondern unterliegen mehr oder weniger starken, zeitlich veränderbaren Schwankungen und Anpassungstendenzen (Inflation, Wirtschaftsentwicklung, etc.). Dies hat eine unmittelbare Wirkung auf die Unterlegungshöhenparameter und/oder Prämienparameter etc. zur Folge.

Es kann vorteilhaft sein, dass für spezifische Ausführungsbeispiele das Datenerfassungssystem 10 z.B. eine Kontrolleinheit mit einem Interface z.B. zum Netzwerk 50 umfasst. Über das Interface kann basierend auf einen Request und/oder nach einem bestimmbaren Zeitintervall mittels der Kontrolleinheit Daten an eine Tarifierungsvorrichtung 12 und/oder Schadensdeckungssystem 11 übermittelt werden und wobei die Daten mindestens Schadendaten eines Schadensdatenrekords 111/131 einer spezifischen Loss-Table 161 umfassen. Bei Überschreiten eines definierbaren Deviationswertes einer betriebsspezifischen Loss-Table 161 zu abgespeicherten Loss-Tables 161 können z.B. mittels der Kontrolleinheit betriebsspezifische und/oder schadensdeckungssystemsspezifische Anlagemittel 20/21/22 aktiviert werden und/oder eine Alert-Meldung an Erfassungseinheiten 101 des Datenerfassungssystem 10 übermittelt werden. Zur Bestimmung des genannten Deviationswertes kann das Datenerfassungssystem 10 z.B. ein statistischen Analysemodul mit einem Interface zum Aggregieren und Analysieren betriebsspezifischen Loss-Tables 161 umfasst, wobei mittels des Analysemoduls basierend auf den kumulierten betriebsspezifischen Loss-Tables 161 der Deviationswert bestimmt wird. Das Analysemodul kann Triggermittel basierend auf Verfahren der grössten Wahrscheinlichkeit und/oder der kleinsten quadratischen Abweichung und/oder ² und/oder Kolmogorov-Smirnov und/oder Anderson-Darling etc. umfassen.

Als Ausführungsvariante kann z.B. natürlich auch das statistische Analysemodul ein Interface zum Aggregieren und Analysieren betriebsspezifischen Schadensrekords 131 und/oder Loss-Tables 161 über das Netzwerk 50 umfassen. In Analogie zum Datenerfassungssystem 10 können die Schadensrekords 131 und/oder Loss-Tables 161 z.B. über eine Kommunikationseinheit des Analysemoduls von lokalen und/oder dezentralisierten Datenbanken über das Netzwerk 50 aggregiert werden. Dabei kann z.B. ein Extraktionsmodul der Inhalt der Daten analysieren und die gefilterten Daten und/oder von den erfassten Daten generierte Metadaten mittels einer entsprechenden Loss-Table 131 dem entsprechenden Benutzer zugeordnet abspeichern bzw. betriebsspezifisch aggregieren. Gemäß der vorliegenden Erfindung kann das Analysemodul mit der oder die Datenbanken mittels eines Netzwerkinterfaces über ein Kommunikationsnetz bi- oder unidirektional verbunden sein. Die Schadensrekords 131 und/oder Loss-Tables 161 können z.B. auf Request oder im Pushverfahren übermittelt werden. Die Datenbanken können über einen oder mehrere Netzwerknodes an das Netzwerk 50 angebunden sein. Das Kommunikationsnetz 50 umfasst wie erwähnt beispielsweise ein GSM- oder ein UMTS-Netz, oder ein satellitenbasiertes Mobilfunknetz, und/oder ein oder mehrere Festnetze, beispielsweise das öffentlich geschaltete Telefonnetz, das weltweite Internet oder ein geeignetes LAN (Local Area Network) oder WAN (Wide Area Network). Insbesondere umfasst es auch ISDN- und XDSL-Verbindungen.

Mittels der Tarifierungsvorrichtung 12 können spezifische Unterlegungshöhenparameter und/oder Prämienparameter z.B. statistisch basierend auf der Segmentierung bzw. Parametrisierung lokalisiert (z.B. länderspezifisch, demographisch etc.) bestimmt werden und z.B. monetäre Kostenparameter umfassen. Das Datenerfassungssystem 10 und/oder die Tarifierungsvorrichtung 12 und/oder das Schadensdeckungssystem 11 kann eine Kontrolleinheit mit einem Interface, wobei basierend auf einen Request und/oder einem bestimmbaren Zeitintervall mittels der Kontrolleinheit die entsprechende Unterlegungshöhenparameter und/oder Prämienparameter für einen Benutzer dynamisch angepasst werden und/oder bei Überschreiten eines definierbaren Deviationswertes zu bereits abgespeicherten Loss-Tables 161 betriebsspezifische Anlagemittel 20, 21, 22 und/oder eine Alertmodul aktiviert werden.

## Patentansprüche

1. Funktionelle Datenbankstruktur für dynamische Datenerfassungssysteme automatisierter und/oder teilweise automatisierter Tarifierungsvorrichtungen (12) bei ein- oder mehrstufigen Schadensdeckungssystemen (11), mittels welcher eine mit Erfassungseinheiten (101) des Datenerfassungssystem (10) erfasste Vielzahl von historischen Schadensdatensrekords (111) wechselseitig zuordenbar sind, wobei ein Schadensdatensrekord (111) mindestens in Abhängigkeit eines Ereignisdatum in einer Speichereinheit abspeicherbar ist, **dadurch gekennzeichnet,**
**dass** mittels ersten dynamisch generierbaren Datenelementen Schadensentwicklungsparameter einem entsprechenden Schadensdatenrekord (111) zuordenbar und abspeicherbar sind, wobei die Schadensentwicklungsparameter mittels eines ersten Filtermoduls (13) basierend auf erfassten Daten generierbar sind,
**dass** mittels zweiten dynamisch generierbaren Datenelementen Ereigniskorrelationsdaten aus den erfassten Daten zuordenbar und abspeicherbar sind, wobei die Ereigniskorrelationsdaten mittels einer entsprechenden dynamischen Verknüpfung mit Batchdatenrekords (141) einer Lookuptable vergleichbar sind, welche Batchdatenrekord (141) mindestens Schadensursachendaten umfassen, und wobei die Ereigniskorrelationsdaten mittels eines zweites Filtermodul (14) filterbar sind,
**dass** mittels dritten dynamisch generierbaren Datenelementen betriebsartspezifische und/oder lokationsspezifische Segmentierungsparameter einem jeweiligen Schadensdatenrekord (131) zuordenbar und abspeicherbar sind, wobei die betriebsartspezifische und/oder lokationsspezifische Segmentierungsparameter mittels einer Exposureeinheit (15) bestimmbar sind und wobei mittels der bestimmten Segmentierungsparameter die erfassten Daten segmentierbar und normierbar sind,
**dass** mittels vierten Datenelementen eine Vielzahl von benutzerspezifischen Loss-Tables (161) generierbar sind, wobei das Schadensdatenrekord (131) mindestens einer bestimmten Loss-Table (161) zuordenbar ist und wobei die Loss-Table (161) mittels einer Extrapolationseinheit (16) dynamisch und entsprechend der Segmentierung generierten Daten chronologisch ergänzbar ist.

2. Funktionelle Datenbankstruktur nach Anspruch 1, **dadurch gekennzeichnet, dass** mittels fünften dynamisch generierbaren Datenelementen mit dem erste Filtermodul (13) erste, variable Wahrscheinlichkeitsparameter zuordenbar und abspeicherbar sind, welche Wahrscheinlichkeitsparameter ein Mass für die Übereinstimmung der erfassten Daten mit den gespeicherten Schadensdatenrekords (111) abspeicherbar umfassen, wobei ein neues Schadensdatenrekord (131) generierbar ist, falls der Wahrscheinlichkeitsparameter für alle Schadensdatenrekords unter einem bestimmbaren Schwellwert liegt.

3. Funktionelle Datenbankstruktur nach Anspruch 1, **dadurch gekennzeichnet, dass** mittels sechsten dynamisch generierbaren Datenelementen mit dem zweiten Filtermodul (14) zweite, variable Wahrscheinlichkeitsparameter zuordenbar und abspeicherbar sind, welche Wahrscheinlichkeitsparameter ein Mass für die Übereinstimmung der erfassten Daten mit den gespeicherten Batchdatenrekords (141) abspeicherbar umfassen, wobei ein neues Batchdatenrekord generiert wird, falls der Wahrscheinlichkeitsparameter für alle Batchdatenrekords (141) unter einem bestimmbaren Schwellwert liegt.

4. Funktionelle Datenbankstruktur nach einem der Ansprüche 1 bis 3, **dadurch gekennzeichnet, dass** mittels siebten dynamisch generierbaren Datenelementen basierend auf der Abweichung einer betriebsspezifischen Loss-Table (161) zu abgespeicherten Loss-Tables (161) mindestens ein variabler Deviationswertparameter einer betriebsspezifischen Loss-Table (161) zuordenbar und abspeicherbar ist, wobei der mindestens eine variabler Deviationswertparameter mittels einer Triggervorrichtung triggerbar ist und wobei betriebsspezifische und/oder schadensdeckungssystemsspezifische Anlagemittel (20/21/22) basierend auf dem siebten Datenelement aktivierbar sind und/oder Alertmeldungen an Erfassungseinheiten (101) des Datenerfassungssystem (10) übermittelbar sind.

5. Funktionelle Datenbankstruktur nach Anspruch 4, **dadurch gekennzeichnet, dass** das siebte dynamische generierte Datenelement mittels einem statistischen Analysemodul mit einem Interface zum Aggregieren und Analysieren betriebsspezifischen Loss-Tables (161) und/oder kumulierte betriebsspezifische Loss-Tables (161) bestimmbar ist, wobei mittels des Analysemoduls basierend auf den kumulierten betriebsspezifischen Loss-Tables (161) der Deviationswert bestimmbar ist.

6. Funktionelle Datenbankstruktur nach einem der Ansprüche 1 bis 5, **dadurch gekennzeichnet, dass** mittels achten dynamisch generierbaren Datenelementen mit dem Segmentierungsunit (151) für unterschiedliche Betriebsarten jeweils eine Parametrisierung (30) basierend auf erfassten betriebsartenspezifischen Daten dynamisch zuordenbar und abspeicherbar ist, wobei das Segmentierungsunit (151) ein Netzwerkinterface zum Zugreifen auf mit Quelldatenbanken verbundenen Netzwerknodes über ein Netzwerk (50) zum Erfassen betriebsartenspezifischer Daten umfasst.

7. Funktionelle Datenbankstruktur nach einem der Ansprüche 1 bis 6, **dadurch gekennzeichnet, dass** mittels neunten dynamisch generierbaren Datenelementen mit einem Gewichtungsmodul des Normierungsunit (152) die Schadensdatenrekords (111/131) normierbar und mittels entsprechenden generierten und zugeordneten Gewichtungsfaktoren gegenseitig gewichtet den Schadensdatenrekords (111/131) zuordenbar und abspeicherbar sind.

8. Funktionelle Datenbankstruktur nach Anspruch 7, **dadurch gekennzeichnet, dass** mittels zehnten dynamisch generierbaren Datenelementen mit dem Gewichtungsmodul gewichtete Länderindizes zuordenbar und abspeicherbar sind, wobei die gewichteten Länderindizes mittels des Gewichtungsmoduls basierend auf lokalisierten Datenbanken länderspezifisch und/oder betriebsartenspezifischer generierbar sind.

9. Funktionelle Datenbankstruktur nach einem der Ansprüche 1 bis 8, **dadurch gekennzeichnet, daß** mittels der bestimmten Segmentierungsparameter die erfassten Daten basierend auf der Datenbankstruktur segmentierbar und normierbar sind.

10. Dynamisches, selbst-organisierendes Datenerfassungsverfahren für automatisierte Tarifierungsvorrichtungen (12) bei ein- oder mehrstufigen Schadensdeckungssystemen (11), wobei eine Vielzahl von historischen Schadensdatensrekords (111) mittels einem Datenerfassungssystem (10) erfasst und einem Ereignisdatum zugeordnet in einer Speichereinheit abgespeichert werden, **dadurch gekennzeichnet,**
**dass** mittels eines ersten Filtermoduls (13) des Datenerfassungssystem (10) erfasste Daten mit gespeicherten Schadensdatenrekords (111) verglichen werden und entsprechend einem Schadensdatenrekord (131) zugeordnet werden, wobei jedes Schadensdatenrekord (111/131) chronologische Schadensentwicklungsparameter umfasst,
**dass** mittels eines zweiten Filtermoduls (14) Ereigniskorrelationsdaten aus den erfassten Daten bestimmt werden, die gefilterten Ereigniskorrelationsdaten mit Batchdatenrekords (141) einer Lookuptable verglichen werden und das Schadensdatenrekord (131) entsprechend einem Batchdatenrekord (141) der Lookuptable zugeordnet wird, wobei ein Batchdatenrekord (141) mindestens Schadensursachendaten umfasst,
**dass** mittels eines Segmentierungsunits (151) einer Exposureeinheit (15) basierend auf den erfassten Daten betriebsartspezifische und/oder lokationsspezifische Segmentierungsparameter des Schadensdatenrekords (131) bestimmt werden und basierend auf den bestimmten Segmentierungsparameter mittels eines Normierungsunits (152) der Exposureeinheit (15) die erfassten Daten segmentiert und normiert werden,
und **dass** das Schadensdatenrekord einer benutzerspezifischen Loss-Table (161) zugeordnet wird, wobei die Loss-Table (161) mittels einer Extrapolationseinheit (16) dynamisch und entsprechend der Segmentierung generierten Daten chronologisch ergänzt wird.

11. Datenerfassungsverfahren nach Anspruch 10, **dadurch gekennzeichnet, dass** mittels des ersten Filtermoduls (13) ein erster, variabler Wahrscheinlichkeitsparameter für eine Übereinstimmung der erfassten Daten mit jedem der gespeicherten Schadensdatenrekords (111) bestimmt wird, wobei ein neues Schadensdatenrekord (131) generiert wird, falls der Wahrscheinlichkeitsparameter für alle Schadensdatenrekords (111) unter einem bestimmbaren Schwellwert liegt.

12. Datenerfassungsverfahren nach einem der Ansprüche 10 oder 11, **dadurch gekennzeichnet, dass** mittels des zweiten Filtermoduls (14) ein zweiter variabler Wahrscheinlichkeitsparameter für eine Übereinstimmung der erfassten Daten mit jedem der gespeicherten Batchdatenrekords (141) bestimmt wird, wobei ein neues Batchdatenrekord (141) generiert wird, falls der Wahrscheinlichkeitsparameter unter einem bestimmbaren Schwellwert liegt.

13. Datenerfassungsverfahren nach einem der Ansprüche 10 bis 12, **dadurch gekennzeichnet, dass** das Datenerfassungssystem (10) eine Kontrolleinheit mit einem Interface umfasst, wobei basierend auf einen Request und/oder nach einem bestimmbaren Zeitintervall mittels der Kontrolleinheit Daten an eine Tarifierungsvorrichtung (12) und/oder Schadensdeckungssystem (11) übermittelt werden und wobei die Daten mindestens Schadensdaten eines Schadensdatenrekords (111/131) einer spezifischen Loss-Table (161) umfassen.

14. Datenerfassungsverfahren nach einem der Ansprüche 10 bis 13, **dadurch gekennzeichnet, dass** bei Überschreiten eines definierbaren Deviationswertes einer betriebsspezifischen Loss-Table (161) zu abgespeicherten Loss-Tables (161) betriebsspezifische und/oder schadensdeckungssystemsspezifische Anlagemittel (20/21/22) aktiviert werden und/oder eine Alertmeldung an Erfassungseinheiten (101) des Datenerfassungssystem (10) übermittelt werden.

15. Datenerfassungsverfahren nach Anspruch 14, **dadurch gekennzeichnet, dass** das Datenerfassungssystem (10) ein statistischen Analysemodul mit einem Interface zum Aggregieren und Analysieren betriebsspezifischen Loss-Tables (161) umfasst, wobei mittels des Analysemoduls basierend auf den kumulierten betriebsspezifischen Loss-Tables (131) der Deviationswert bestimmt wird.

16. Datenerfassungsverfahren nach einem der Ansprüche 10 bis 15, **dadurch gekennzeichnet, dass** mittels des Segmentierungsunit (151) für unterschiedliche Betriebsarten jeweils eine Parametrisierung (30) basierend auf erfassten betriebsartenspezifischen Daten dynamisch bestimmt wird und in einer Speichereinheit der entsprechenden Betriebsart zugeordnet abspeichert wird, wobei das Segmentierungsunit (151) ein Netzwerkinterface zum Zugreifen auf mit Quelldatenbanken verbundenen Netzwerknodes über ein Netzwerk (50) zum Erfassen betriebsartenspezifischer Daten umfasst.

17. Datenerfassungsverfahren nach einem der Ansprüche 10 bis 16, **dadurch gekennzeichnet, dass** die Normierungsunit (152) ein Gewichtungsmodul, zum Normieren der Schadensdatenrekords (111/131) umfasst, wobei die Schadensdatenrekords (111/131) mittels variabler Gewichtungsfaktoren gewichtet werden und wobei die Gewichtungsfaktoren den Schadensdatenrekords (111/131) zugeordnet abgespeichert werden.

18. Datenerfassungsverfahren nach Anspruch 17, **dadurch gekennzeichnet, dass** die Gewichtung mittels des Gewichtungsmoduls dynamisch basierend auf den betriebsartenspezifischen Daten durchgeführt wird, wobei periodisch und/oder auf Request die Gewichtung des Normierungsmoduls (152) aktualisiert wird.

19. Datenerfassungsverfahren nach einem der Ansprüche 17 oder 18, **dadurch gekennzeichnet, dass** das Gewichtungsmodul gewichtete Länderindizes umfasst, wobei die gewichteten Länderindizes mittels des Gewichtungsmoduls basierend auf lokalisierten Datenbanken länderspezifisch und/oder betriebsartenspezifischer generiert werden.

20. Computerprogrammprodukt, das direkt in den internen Speicher eines digitalen Computers geladen werden kann und Softwarecodeabschnitte umfasst, mit denen die Schritte gemäss einem der Ansprüche 10 bis 19 ausgeführt werden, wenn das Produkt auf einem Computer läuft.
